# EUROPÄISCHE PATENTSCHRIFT

(11) **EP 2 428 688 B1**
(45) Veröffentlichungstag und Bekanntmachung des Hinweises auf die Patenterteilung: **17.04.2013**
(21) Anmeldenummer: 11177865.0
(22) Anmeldetag: 17.08.2011
(51) Int. Cl.: F16B 5/02, F16B 31/00, F16B 31/02

(54) **Einschraubanordnung mit definierter maximaler Drehmomentübertragung**
Screw assembly with defined maximum torque transmission
Agencement de vissage doté d'une transmission de couple maximale définie

(30) Priorität: 13.09.2010 DE 102010045101
(43) Veröffentlichungstag der Anmeldung: 14.03.2012
(73) Patentinhaber: SICK AG, 79183 Waldkirch (DE)
(72) Erfinder: Döbele, Christian, 79115 Freiburg (DE)
(74) Vertreter: Patentanwälte Westphal, Mussgnug & Partner

(56) Entgegenhaltungen:
- GB-A- 2 297 000
- US-A- 4 107 961
- US-A1- 2007 098 517

## Beschreibung

Die Erfindung betrifft eine Einschraubanordnung mit einer vordefinierten maximalen Drehmomentübertragung, insbesondere eine Einschraubanordnung mit einer vordefinierten maximalen Drehmomentübertragung zum Einschrauben in ein Innengewinde eines Halters.

Schrauben zum Einschrauben in ein Gewinde sind in verschiedensten Ausgestaltungen wohlbekannt. Die gängigsten Ausführungsformen weisen einen in der Regel zylindrischen Grundkörper mit einem Außengewinde und einem Schraubenkopf an einem Ende des Grundkörpers zum Einschrauben in ein Innengewinde auf. Jedoch ist diesen Schrauben gemein, dass beim Einschrauben des Außengewindes in ein Innengewinde, beispielsweise einer Mutter, und anschließendem Festziehen der Schraube, der Schraubenkopf in einer undefinierten Endstellung stehen bleibt. Diese ist von einer Flächenpressung zwischen dem Schraubenkopf und der Mutter sowie von der jeweiligen Lage eines Gewindeanfangs der Schraube bzw. der Mutter abhängig. Der Schraubenkopf kann in dieser Winkelstellung nicht weiter ausgerichtet werden, ohne die Flächenpressung und somit eine Zugspannung in der Schraube bzw. auf die Mutter zu verändern. Soll der Schraubenkopf dennoch verdreht werden, so kann lediglich die Schraube weiter angezogen oder die Schraube entsprechend gelöst werden. In beiden Fällen weicht die erzielte Flächenpressung gegebenenfalls von einer gewünschten Flächenpressung ab.

Gleiches gilt anschaulich beispielsweise für einen Haken zum Aufhängen eines Bildes, der in eine Wand eingeschraubt wird, wobei eine Öffnung des Hakens vertikal nach oben ausgerichtet sein soll. Auch in diesem Fall ist ein nachträgliches Ausrichten des Hakens nicht mehr möglich, ohne die Einschraubtiefe und somit den Halt in der Wand zu beeinflussen.

Auch im Rahmen von industriellen Anwendungen werden häufig Bauteile mit einem Gewinde versehen, um diese in einen Halter einzuschrauben. Auch in diesen Fällen ist eine gezielte Ausrichtung des Bauteils bei gleichzeitiger Einhaltung einer definierten Flächenpressung von großer Bedeutung. Beispielsweise ist es für einen Einbau von Sensoren besonders wichtig, dass diese fest und gleichzeitig korrekt ausgerichtet in einem Halter angeordnet werden können. Dieser Halter wird bisher in der Regel fest mit der zugehörigen Anlage verschweißt, um Spalte und zusätzliche Schmutzkanten zu vermeiden. Hierdurch wird jedoch auch ein Gewinde des Halters feststehend ausgerichtet und es ist nicht möglich, eine exakte Endlage eines in bzw. auf den Halter aufgeschraubten Sensors im Voraus zu bestimmen oder im Nachhinein unter Beibehaltung der Flächenpressung neu auszurichten. Eine exakte Ausrichtung des Sensors bezüglich des Halters bzw. der Anlage ist jedoch für eine korrekte Erfassung und Funktionsweise des Sensors unerlässlich.

Bisher läuft eine Montage eines Sensors beispielsweise auf einem rohrförmigen Halter daher derart ab, dass der rohrförmige Halter direkt an den Sensor angeschraubt wird, so dass beide eine gemeinsame Einheit bilden. Anschließend wird diese Einheit an der Anlage festgeschweißt oder mit einer Klemmanordnung montiert. Nachteilig wirkt sich hierbei die feste Verschweißung oder Klemmbefestigung aus, da der Sensor nicht nachjustiert und nicht ohne ein Öffnen der Schweißnaht bzw. der Klemmbefestigung ausgewechselt werden kann. In der Regel wird bei einem Öffnen die Klemmbefestigung zerstört, so dass eine Wiederverwendbarkeit ausgeschlossen ist. Insbesondere die Klemmbefestigung kann zusätzliche Fugen und Spalten aufweisen, die wiederum anfällig für Verschmutzungen sind. Insbesondere im Falle einer beschränkten Zugänglichkeit des Einbauortes können sich daher weitere Schwierigkeiten bei der Montage und beim Auswechseln des Sensors ergeben.

Neben den beschriebenen Schweißverbindungen und Klemmbefestigungen sind sogenannte Bajonettverschlüsse aus dem Stand der Technik bekannt. Diese ermöglichen ein Ausrichten in begrenztem Umfang sowie eine Möglichkeit zum Auswechseln der miteinander verbundenen Bauteile. Jedoch erfordern diese Verschlüsse einen entsprechend ausgeführten Hinterschnitt in mindestens einem der miteinander zu verbindenden Bauteile, um diese miteinander zu verklemmen. Dies beschränkt wiederum die Ausrichtungsmöglichkeit, da lediglich ein beschränkter Winkelabschnitt überfahren werden kann, ohne die Verklemmung zu lösen. Außerdem ist bei der Montage eine erhöhte Fügekraft erforderlich, um den Hinterschnitt des Bajonettverschlusses bei der Montage zu erreichen.

Aus der GB 2 297 000 A ist eine Anordnung mit einer vordefinierten Maximalendrehmomentsübertragung zum Aufschrauben auf ein Außengewinde eines Kupplungsteils bekannt, bei dem eine Gewindehülse mittels Drehmomentübertragungsmitteln in kraftschlüssigem Eingriff mit dem Grundkörper zum Übertragen eines Drehmoments vor dem Grundkörper auf die Gewindehülse steht, die zwischen der Einschraub- und Grundstellung oder in Koppelstellung angeordneten Zwischenstellung axial verschoben ist, und bei der der kraftschlüssige Eingriff gelöst ist, sobald die Gewindehülse in die Endkoppelstellung verschoben ist, so dass die Anordnung relativ zu der Gewindehülse ohne weitere Erhöhung einer Flächenpressung in einer Einschraubrichtung frei drehbar ist.

Des Weiteren werden gemäß dem Stand der Technik Sensoren beispielsweise an einen Halter über einen Einschnappmechanismus befestigt. Jedoch erfordert auch hierbei ein Lösen des Sensors in der Regel eine gute Zugänglichkeit, wobei in der Regel der Einschnappmechanismus beim Lösen des Sensors zerstört wird.

Der Erfindung liegt daher die Aufgabe zu Grunde, eine Einschraubanordnung zum Einschrauben in einen Halter bereitzustellen, die ein Einschrauben mit einer definierten Flächenpressung bzw. einem vordefinierten maximalen Drehmoment ermöglicht und gleichzeitig zumindest in der eingeschraubten Endstellung ausgerichtet werden kann, ohne die Flächenpressung zu verändern. Außerdem soll die Einschraubanordnung möglichst zerstörungsfrei wieder aus dem Halter entnehmbar sein.

Diese Aufgabe wird erfindungsgemäß gelöst durch die im Hauptanspruch enthaltenen Merkmale. Vorteilhafte Weiterbildungen und bevorzugte Ausführungsformen beschreiben die Unteransprüche.

Demnach wird eine Einschraubanordnung mit einer vordefinierten maximalen Drehmomentübertragung zum Einschrauben in ein Innengewinde eines Halters mit einem in einer axialen Längsrichtung erstreckten Grundkörper, einem an dem Grundkörper angeordneten Einschraubanschlag zum Beaufschlagen des Halters und zum Begrenzen einer Einschraubtiefe der Einschraubanordnung in den Halter und einer Gewindehülse mit einem Außengewinde zum Einschrauben in das Innengewinde des Halters bereitgestellt. Die Gewindehülse ist koaxial auf dem Grundkörper angeordnet und in dessen axialer Längsrichtung zwischen einer Einschraubgrundstellung und einer Entkoppelstellung in Abhängigkeit von einer Flächenpressung zwischen dem Einschraubanschlag und dem Halter verschiebbar. Außerdem steht die Gewindehülse mittels Drehmomentübertragungsmitteln in kraftschlüssigem Eingriff mit dem Grundkörper zum Übertragen eines Drehmoments von dem Grundkörper auf die Gewindehülse, solange sich die Gewindehülse in der Einschraubgrundstellung befindet oder in eine zwischen der Einschraubgrundstellung und der Entkoppelstellung angeordneten Zwischenstellung axial verschoben ist. Der kraftschlüssige Eingriff ist gelöst, sobald die Gewindehülse in die Entkoppelstellung verschoben ist, sodass die Einschraubanordnung relativ zu der Gewindehülse ohne weitere Erhöhung der Flächenpressung in einer Einschraubdrehrichtung frei drehbar ist.

Dies bedeutet, dass die Einschraubanordnung mindestens mit einem Abschnitt ihres längserstreckten Grundkörpers in den Halter einführbar ist und die Gewindehülse in diesem Abschnitt angeordnet ist. Zunächst befindet sich die Gewindehülse in der Einschraubgrundstellung und schraubt sich immer tiefer in das Innengewinde des Halters, bis der Einschraubanschlag den Halter kontaktiert bzw. beaufschlagt.

Bei weiterer Drehung der Einschraubanordnung wird die Gewindehülse immer tiefer in den Halter gezogen, wobei der Grundkörper aufgrund des beaufschlagten Einschraubanschlags von dem Halter zurückgehalten wird. Aufgrund der axialen Verschiebbarkeit der Gewindehülse kann diese sich nun bezüglich des Grundkörpers aus der anfänglichen Einschraubgrundstellung, über mindestens eine oder mehrere Zwischenstellungen axial nach unten verschieben, bis diese eine Entkoppelstellung erreicht. Mit Erreichen der Entkoppelstellung wird die Gewindehülse gleichzeitig aus dem kraftschlüssigen Eingriff mit dem Grundkörper gelöst, so dass keine Drehmomentübertragung von dem Grundkörper auf die Gewindehülse erfolgt.

Der Grundkörper kann somit beliebig weitergedreht werden, ohne dass sich die Gewindehülse weiterdreht. Die Drehmomentübertragungsmittel sind hierzu zwischen der Gewindehülse und dem Grundkörper wirkend angeordnet. Dies bedeutet, dass es sich hierbei nicht zwangsläufig um separate Bauteile handeln muss. Vielmehr können die Gewindehülse und der Grundkörper entsprechende konstruktive Ausgestaltungen (wie nachfolgend beschrieben) aufweisen, um den gegenseitigen Eingriff bereitzustellen. Gemäß einer bevorzugten Ausführungsform umfasst die Einschraubanordnung außerdem einen koaxial auf dem Grundkörper benachbart zu der Gewindehülse angeordneten Mitnehmer, der auf dem Grundkörper axial verschiebbar zwischen einer Grundstellung und einer Ausweichstellung angeordnet ist. Die Drehmomentübertragungsmittel umfassen erste und zweite Drehmomentübertragungsmittel und der Mitnehmer steht mittels der ersten Drehmomentübertragungsmittel in kraftschlüssigem Eingriff mit der Gewindehülse zum Übertragen eines Drehmoments von dem Grundkörper auf die Gewindehülse, solange sich die Gewindehülse in der Einschraubgrundstellung befindet oder in die Zwischenstellung axial verschoben ist. Mittels der zweiten Drehmomentübertragungsmittel steht der Mitnehmer trotz axialer Verschiebbarkeit des Mitnehmers in stetigem drehmomentübertragendem Eingriff mit dem Grundkörper.

Dies bedeutet, dass zusätzlich zu der verschiebbaren Gewindehülse noch ein Mitnehmer auf dem Grundkörper verschiebbar angeordnet sein kann. Dieser kann beispielsweise im Wesentlichen ringförmig ausgebildet sein und in seiner Grundstellung mit einer Stirnseite an einer Stirnseite der Gewindehülse anliegen.

Die Aufteilung der Drehmomentübertragungsmittel in erste und zweite Drehmomentübertragungsmittel bewirkt, dass der Mitnehmer gegenüber der voranstehenden Ausführungsform quasi zwischen die Gewindehülse und den Grundkörper kraftschlüssig zwischengeschaltet wird. Mittels der zweiten Drehmomentübertragungsmittel wird eine Drehung des Grundkörpers trotz der Verschiebbarkeit des Mitnehmers stets auf diesen übertragen. Es spielt also keine Rolle, in welcher Stellung sich der Mitnehmer befindet. Von dem Mitnehmer wird eine Drehung mittels der ersten Drehmomentübertragungsmittel auf die Gewindehülse übertragen, wobei hierfür deren aktuelle Stellung entscheidend ist.

Eine Übertragung ist gemäß der voranstehenden Beschreibung nur möglich, solange sich die Gewindehülse in ihrer Grundstellung oder einer Zwischenstellung, nicht jedoch in der Entkoppelstellung, befindet.

Beispielsweise umfassen die jeweiligen Drehmomentübertragungsmittel jeweils mindestens einen sich in axialer Richtung erstreckenden Fortsatz und mindestens eine sich in entgegengesetzter axialer Richtung hierzu erstreckende Ausnehmung zur kraftschlüssigen Aufnahme des Fortsatzes zum Übertragen eines Drehmoments. Diese Anordnung bietet die Möglichkeit, durch axiales Verschieben des Fortsatzes bezüglich der Nut einen gegenseitigen Eingriff zu lösen.

Beispielsweise ist jeweils mindestens einer der Fortsätze der Gewindehülse und mindestens eine der Ausnehmungen dem Grundkörper und/oder dem Mitnehmer zugeordnet oder mindestens einer der Fortsätze dem Grundkörper und/oder dem Mitnehmer und mindestens eine der Ausnehmungen der Gewindehülse zugeordnet.

Gemäß weiterer Ausführungsformen ist mindestens einer der Fortsätze dem Mitnehmer und mindestens eine der Ausnehmungen dem Grundkörper zugeordnet oder mindestens einer der Fortsätze dem Grundkörper und mindestens eine der Ausnehmungen dem Mitnehmer zugeordnet.

Dies bedeutet, dass jeweils und je nach Ausführungsform eine ineinandergreifende Fortsatz-Ausnehmungsanordnung zwischen der Gewindehülse und dem Grundkörper bzw. zwischen der Gewindehülse und dem Mitnehmer und/oder zwischen dem Mitnehmer und dem Grundkörper vorgesehen ist.

Vorzugsweise ist der mindestens eine Fortsatz als Zapfen und die mindestens eine Ausnehmung als Nut ausgebildet, wobei der Zapfen zum kraftschlüssigen Eingreifen in die Nut zum Übertragen eines Drehmoments ausgebildet ist.

Selbstverständlich können auch mehrere Fortsätze und Nuten an dem jeweiligen Bauteil ausgebildet sein, die vorzugsweise gleichmäßig beabstandet an diesem angeordnet sind.

Gemäß einer weiteren Ausführungsform umfasst der mindestens eine Zapfen der ersten Drehmomentübertragungsmittel an einem der mindestens einen Nut zugewandten Eingriffsende mindestens eine Gleitoberfläche, um mindestens in der Entkoppelstellung der Gewindehülse den Mitnehmer beim Einschrauben der Einschraubanordnung in die Ausweichstellung zu verschieben, sodass ein Lösen des kraftschlüssigen Eingriffs des Mitnehmers mit der Gewindehülse erfolgt.

Vorzugsweise ist die mindestens eine Gleitoberfläche als im Wesentlichen schräge, rampenförmige Gleitfläche ausgebildet, welche in Einschraubrichtung derart gekippt ist, dass der Zapfen bei einem Drehen des Mitnehmers in Einschraubrichtung durch Anheben des Zapfens aus der Nut aus dem Eingriff mit der Nut gelöst wird und bei einem Drehen des Mitnehmers gegen die Einschraubrichtung in dem Eingriff mit der Nut verbleibt.

Gemäß einer weiteren Ausführungsform ist der Mitnehmer mittels erster Vorspannmittel relativ zu dem Grundkörper mindestens in der axialen Richtung in Richtung seiner Grundstellung vorgespannt. Dies bewirkt, dass dieser in einem ansonsten unbelasteten Zustand zurück in seine Grundstellung verschoben wird.

Gemäß einer weiteren Ausführungsform ist die Gewindehülse mittels zweiter Vorspannmittel relativ zu dem Grundkörper mindestens in der axialen Richtung in Richtung der Einschraubgrundstellung vorgespannt. Dies bewirkt, dass die Gewindehülse in einem ansonsten unbelasteten Zustand in die Einschraubgrundstellung verschoben ist.

Gemäß einer anderen Ausführungsform umfasst die Einschraubanordnung im Bereich des Einschraubanschlags dritte Vorspannmittel für ein vorgespanntes Beaufschlagen des Halters. Dies bewirkt, dass der Grundkörper beim Einschrauben in den Halter vorgespannt wird.

Vorzugsweise sind die ersten, zweiten und/oder dritten Vorspannmittel aus einer Gruppe bestehend aus elastischen Gummiringen, Spiralfedern oder Tellerfedern ausgewählt. Die dritten Vorspannmittel können beispielsweise auch durch eine sog. Flachdichtung ausgeführt werden. Diese leistet in dieser Ausgestaltungsform jedoch abhängig von ihrer Größe lediglich einen geringen elastischen Beitrag, so dass in diesem Fall auch auf die dritten Vorspannmittel verzichtet werden kann, falls mindestens die ersten und/oder die zweiten Vorspannmittel die nötige Vorspannung übernehmen. Umgekehrt können auch lediglich ausreichend dimensionierte dritte Vorspannmittel vorgesehen werden, die eine gesamte Vorspannung übernehmen.

Gemäß einer weiteren Ausführungsform umfasst die Einschraubanordnung einen Sensor, der drehfest an einem der Gewindehülse abgewandten Ende des Grundkörpers angeordnet ist.

Demnach ist der Sensor fest mit dem Grundkörper verbunden und kann beliebig ausgerichtet werden, sobald der Grundkörper frei drehbar gegenüber der Gewindehülse ist.

Beispielsweise kann der Grundkörper mehrere drehfest miteinander verbundene Einzelabschnitte umfassen. Für eine einfachere Montage der gesamten Einschraubanordnung kann der Grundkörper demnach mehrteilig ausgeführt sein.

Außerdem kann der Grundkörper in dessen axialer Längsrichtung eine durchgängige Bohrung umfassen. Diese kann beispielsweise zur Aufnahme eines Kabelbaumes dienen.

Des Weiteren wird eine Sensoranordnung zum Befestigen an einem Halter bereitgestellt, mit mindestens einem optoelektrischen Sensor und einer Einschraubanordnung zum Einschrauben in ein Innengewinde eines Halters, wobei die Einschraubanordnung gemäß der voranstehenden Beschreibung ausgebildet ist. Vorzugsweise kann die Sensorvorrichtung in Bereichen mit hohen Reinlichkeitsanforderungen verwendet werden, da gemäß der Beschreibung eine leichte Abdichtung unter Vermeidung von zusätzlichen Spalten und Fugen ermöglicht wird. Somit ist auch eine Verwendung im Hygienebereich möglich.

Die Erfindung wird nun anhand der Figuren näher beschrieben und erläutert. Gleiche Bezugszeichen beschreiben stets gleiche Bauteile in den verschiedenen Figuren.

Die Zeichnungen zeigen in
- Figur 1: eine Einbausituation eines Sensors in einem rohrförmigen Halter in perspektivischer Darstellung,
- Figur 2: eine perspektivische Außenansicht bzw. eine geschnittene Ansicht einer erfindungsgemäßen Einschraubanordnung,
- Figur 3: die Einbausituation nach Figur 1 in einer längsgeschnittenen Seitenansicht mit der erfindungsgemäßen Einschraubanordnung in eingebautem Zustand,
- Figur 4: die erfindungsgemäße Einschraubanordnung in einer nicht eingebauten Grundstellung,
- Figur 5: die erfindungsgemäße Einschraubanordnung in einem in dem rohrförmigen Halter eingebauten Zustand,
- Figur 6: die erfindungsgemäße Einschraubanordnung in einer entkoppelten Stellung für eine freie Drehbarkeit, und
- Figur 7: die erfindungsgemäße Einschraubanordnung in eingeschraubtem Zustand zum Herausschrauben aus dem Halter.

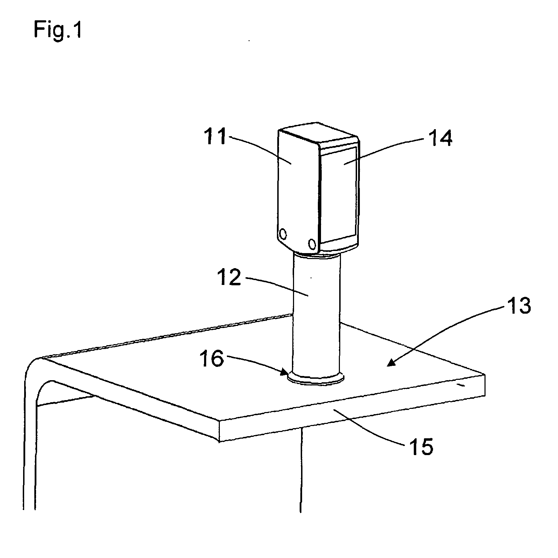

Figur 1 zeigt einen optoelektrischen Sensor 11, der mittels eines rohrförmigen Halters 12 an einer Anlage 13 montiert ist. Hierbei ist eine Sensorfläche 14 des Sensors 11 parallel zu einer Vorderkante 15 der dargestellten Anlage 13 ausgerichtet, so dass ein senkrecht zu der Sensorfläche 14 ausgesendeter oder empfangener Lichtstrahl ebenfalls senkrecht zu der Vorderkante 15 der Anlage 13 ausgerichtet ist. Beispielsweise ist der Halter 12 mittels einer Schweißnaht 16 an der Anlage 13 befestigt oder mittels eines Gewindes verbunden.

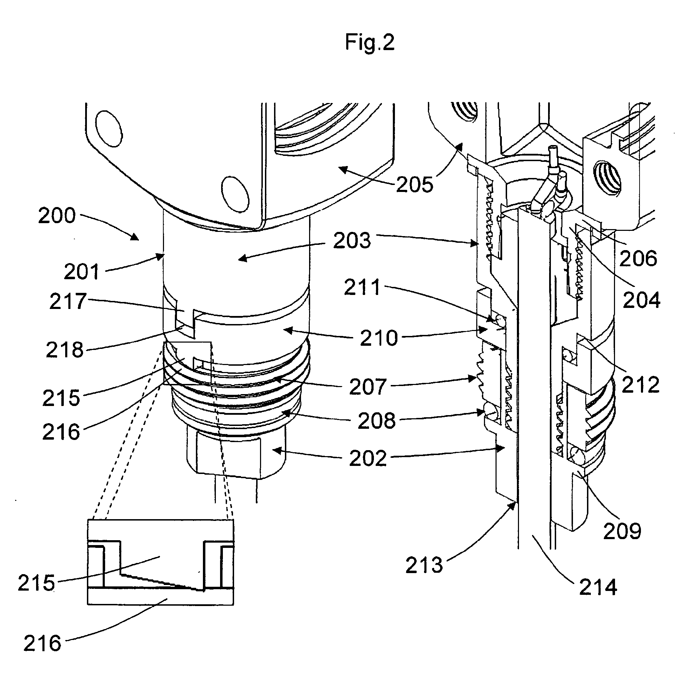

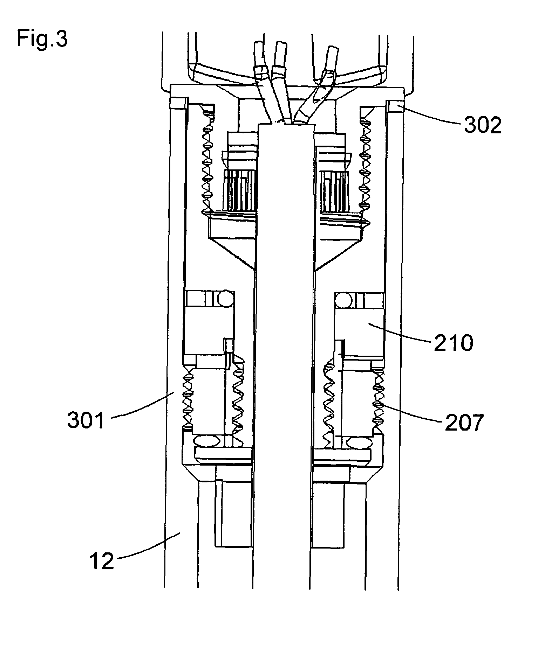

Figur 2 zeigt einen Aufbau einer erfindungsgemäßen Einschraubanordnung 200, zum Befestigen des Sensors 11 in dem rohrförmigen Halter 12 mit einem Grundkörper 201, der für eine bessere Montierbarkeit der Komponenten der Einschraubanordnung 200 mehrteilig ausgebildet ist und in der dargestellten Ausführungsform eine Druckhülse 202, eine Druckmutter 203 sowie eine Adapterhülse 204 zur Aufnahme eines Sensorgehäuses 205 des Sensors 11 an einem ersten Ende des Grundkörpers 201 umfasst. Die Adapterhülse 204 des Grundkörpers 201 weist einen umlaufenden ersten Flansch 206 auf, der als Einschraubanschlag zum Beaufschlagen des Halters 12 und zum Begrenzen einer Einschraubtiefe der Einschraubanordnung 200 dient. Des Weiteren umfasst die Einschraubanordnung 200 eine Gewindehülse 207 mit einem Außengewinde zum Einschrauben der Einschraubanordnung 200 in das Innengewinde des Halters (vgl. Fig. 3). Die Gewindehülse 207 ist koaxial auf einem zylindrischen Abschnitt der Druckhülse 202 des Grundkörpers 201 angeordnet und ist in dessen axialer Längsrichtung verschiebbar. Angrenzend an ein unteres Ende der Gewindehülse 207 ist ein als O-Ring ausgebildetes zweites Vorspannmittel 208 zum Vorspannen der Gewindehülse 207 gegenüber einem an der Druckhülse 202 angeordneten zweiten Flansch 209 vorgesehen. An einem dem unteren Ende der Gewindehülse 207 entgegengesetzten oberen Ende der Gewindehülse 207 ist auf der Druckmutter 203 des Grundkörpers 201 und angrenzend an die Gewindehülse 207 ein Mitnehmer 210 angeordnet, der ebenfalls axial verschiebbar zu dem Grundkörper 201 ist. Der Mitnehmer 210 ist mittels eines als O-Ring ausgebildeten ersten Vorspannmittels 211 gegenüber einem an der Druckmutter 203 angeordneten Absatz 212 vorgespannt. Lediglich optional umfasst der Grundkörper 201 eine in einer axialen Längsrichtung verlaufende Durchgangsbohrung 213, in der beispielsweise ein Kabelbaum 214 verlegt werden kann.

Mittels der als Zapfen 217 und Nut 218 ausgebildeten ineinandergreifenden zweiten Drehmomentübertragungsmittel wird eine Drehbewegung der Druckmutter 200 bzw. des Grundkörpers 201 auf den Mitnehmer 210 übertagen.

Dieser leitet die Drehbewegung über die als Zapfen 215 und Nut 216 ausgebildeten, ineinandergreifenden ersten Drehmomentübertragungsmittel auf die Gewindehülse 207 weiter.

Figur 3 zeigt die Einschraubanordnung 200 aus Fig. 2 in einem eingeschraubten Zustand, wobei die Einschraubanordnung 200 in den Halter 12 eingeschraubt ist und der Halter 12 ein Innengewinde 301 zur Aufnahme der Gewindehülse 207 umfasst.

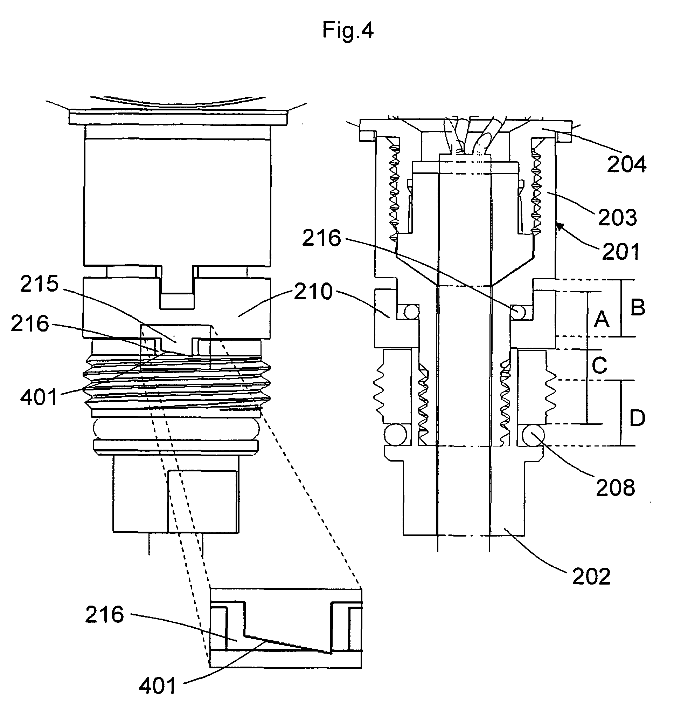

Die Einschraubanordnung 200 stellt eine selbsttätig veränderbare Kupplungsbedingung zwischen dem Sensorgehäuse 205 und der Gewindehülse 207 dar. Hierbei wird eine Drehmomentübertragung beim Einschrauben abhängig von der axialen Position der Bauteile selbsttätig zu- und abgeschaltet. Dies erfolgt über die axiale Bewegung der Gewindehülse 207 relativ zu dem Grundkörper 201 nach unten und einer damit verbundenen Auskopplung des drehmomentübertragenden Zapfens 215 des Mitnehmers 210 aus einem Eingriff mit der Nut 216 der Gewindehülse 207 (vgl. Fig. 2). Die Einschraubanordnung 200 wird mit dem als Einschraubanschlag ausgebildeten ersten Flansch 206 bzw. der an diesem angeordneten Flachdichtung 302 auf den Halter 12 aufgespannt. Da die Zapfen 215 zwischen dem Mitnehmer 210 und der Gewindehülse 207 kein weiteres Drehmoment übertragen können, lässt sich das Sensorgehäuse 11 in Einschraubrichtung weiter drehen, wobei seine Höhenlage in dem Halter 12 und damit die Flächenpressung nicht verändert wird. Das Lösen des Eingriffs des Zapfens 215 aus der Nut 216 wird durch die an dem Zapfen 215 ausgebildeten schrägen Gleitflächen 401 (vgl. Fig. 4 u. 5) ermöglicht, die den Zapfen 215 aus der Nut 216 und somit den Mitnehmer 210 nach oben ausweichend entgegen einer mittels der ersten Vorspannmittel 211 bereitgestellten Vorspannung des Mitnehmers 210 anheben. Auf Grund dieser Ausweichmöglichkeit des Mitnehmers 210 wird im Wesentlichen keine zusätzliche Kraft auf die Gewindehülse 207 übertragen. Der Mitnehmer 210 und damit die gesamte Einschraubanordnung 200 lässt sich nun gegenüber der Gewindehülse 207 in der Einschraubrichtung weiterdrehen bis der Zapfen 215 in die nächste Nut 216 eingreift. Erfolgt eine weitere Drehbewegung in Einschraubrichtung, so wiederholt sich der beschriebene Ablauf und der Zapfen 215 wird erneut aus der Nut 216 gehoben. Wird die Einschraubanordnung 200 und somit auch der Mitnehmer 210 jedoch in entgegengesetzter Richtung bezüglich der Gewindehülse 207 gedreht, so kann der Zapfen 215 nicht mittels der schrägen Gleitflächen 401 aus dem Eingriff mit der Nut 216 angehoben werden, sondern verbleibt im Eingriff mit dieser, sodass ein Drehmoment von dem Grundkörper 201 auf die Gewindehülse 207 übertragen wird und somit die gesamte Einschraubanordnung 200 aus dem Halter 12 geschraubt werden kann.

Die Figuren 4, 5 und 6 zeigen einen Ablauf des Einschraubvorgangs nochmals in detaillierter Form in mehreren Schritten. Wie voranstehend beschrieben umfasst der in axialer Längsrichtung erstreckte Grundkörper 201 in der dargestellten Ausführungsform eine Druckhülse 202, eine Druckmutter 203 sowie eine Adapterhülse 204, die jeweils drehmomentfest miteinander verbunden sind und das Sensorgehäuse 11 tragen. Dieses ist vorzugsweise drehmomentfest mit dem Grundkörper 201 verbunden. Der Mitnehmer 210 ist axial geführt und in Grenzen eingeschränkt zwischen einer Grundstellung A und einer Ausweichstellung B beweglich. Trotz dieser axialen Verschiebbarkeit des Mitnehmers 210 ist dieser stetig drehmomentübertragend mit dem Grundkörper 201 und somit ggf. drehfest gegenüber dem Sensorgehäuse 205 verbunden. Auch die Gewindehülse 207 ist in axialer Richtung in Grenzen zwischen einer Einschraubgrundstellung C und einer Entkoppelstellung D beweglich. Eine Drehmomentverbindung zu dem Mitnehmer 210 erfolgt mittels der als Zapfen 215 und Nut 216 ausgeführten ersten Drehmomentübertragungsmittel und ist von der axialen Position des Mitnehmers 210 sowie der axialen Position der Gewindehülse 207 abhängig. Die Gewindehülse 207 ist gegenüber der Druckhülse 202 mittels der zweiten Vorspannmittel 208 vorgespannt gelagert. Diese Vorspannung ermöglicht einerseits eine axiale Verschiebbarkeit der Gewindehülse 207 bei einem Einschrauben der Einschraubanordnung in den Halter 12 und steuert je nach Komprimierung der zweiten Vorspannmittel 208 die anliegende Flächenpressung an dem als Einschraubanschlag ausgeführten ersten Flansch 206.

Figur 4 zeigt die Einschraubanordnung 200 in einer nicht verschraubten Grundstellung, in der die ersten 211 und zweiten Vorspannmittel 208 lediglich unter geringer Vorspannung stehen. Die Gewindehülse 207 ist drehmomentfest mit dem Mitnehmer 210 verbunden. Dies bedeutet, dass bei einer Drehbewegung der Einschraubanordnung 200 die Gewindehülse 207 mitgedreht wird. Auf diese Weise kann sich deren Außengewinde in das Innengewinde 301 des Halters 12 einschrauben. In Figur 4 ist die Restdicke der O-Ringe in der Ausweichstellung B und der Entkoppelstellung D nicht berücksichtigt.

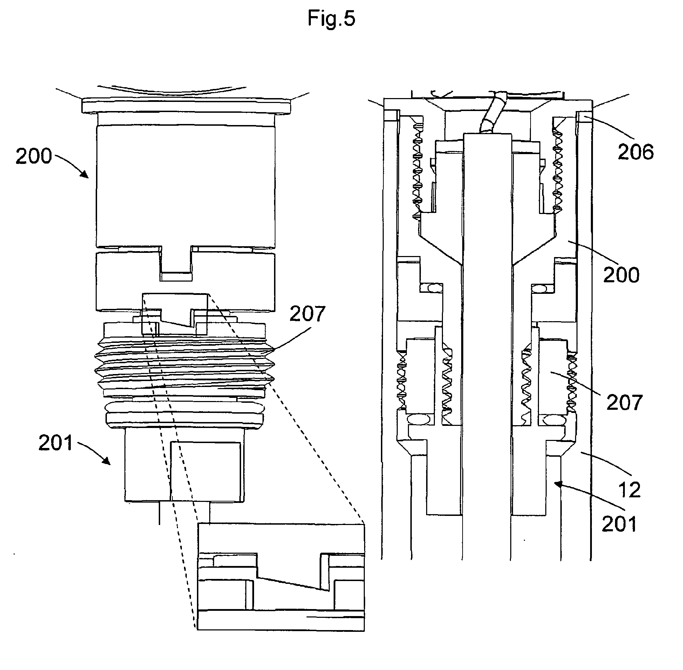

Der in dem Halter 12 eingeschraubte Zustand der Einschraubanordnung 200 ist in Figur 5 dargestellt. Beim Einschrauben der Einschraubanordnung 200 in den Halter 12 baut sich eine innere Spannung zwischen der Gewindehülse 207 und dem ersten Flansch 206 auf, sobald der erste Flansch 206 den Halter 12 beaufschlagt. Der erste Flansch 206 presst sich gegen den Halter 12, während sich die Gewindehülse 207 aufgrund ihrer Drehung immer tiefer in den Halter 12 hineinzieht. Die Gewindehülse 207 bewegt sich also relativ zu der Einschraubanordnung 200 bzw. dem Sensorgehäuse 205 nach unten, so dass die zweiten Vorspannmittel 208 zunehmend komprimiert werden und sich wiederum an dem zweiten Flansch 209 der Druckhülse 202 abstützen, so dass auf diese bzw. den Grundkörper 201 eine Druckkraft nach unten eingeleitet wird. Der Grundkörper 201 leitet diese Druckkraft auf den ersten Flansch 206 weiter, so dass die Flächenpressung zwischen dem ersten Flansch 206 und dem Halter 12 verstärkt wird. Die Komprimierung der ersten Vorspannmittel 208 durch die Gewindehülse 207 wird erhöht, solange sich die Gewindehülse 207 noch in der Einschraubgrundstellung C befindet oder in einer zwischen der Einschraubgrundstellung C und der Entkoppelstellung D angeordneten Zwischenstellung befindet. Sobald die Gewindehülse 207 jedoch vollständig in die Entkoppelstellung D verschoben ist, wird der kraftschlüssige Eingriff des Mitnehmers 210 in die Gewindehülse 207 gelöst, so dass keine weitere Drehmomentübertragung in Einschraubrichtung erfolgt. Die maximale Flächenpressung des ersten Flansches 206 bezüglich des Halters 12 ist dann erreicht. Dies bedeutet, dass die maximale Flächenpressung konstruktiv über den axialen maximal möglichen Bewegungsumfang der Gewindehülse 207 sowie der Komprimierbarkeit der ersten 211 bzw. zweiten Vorspannmittel 208 bestimmt wird.

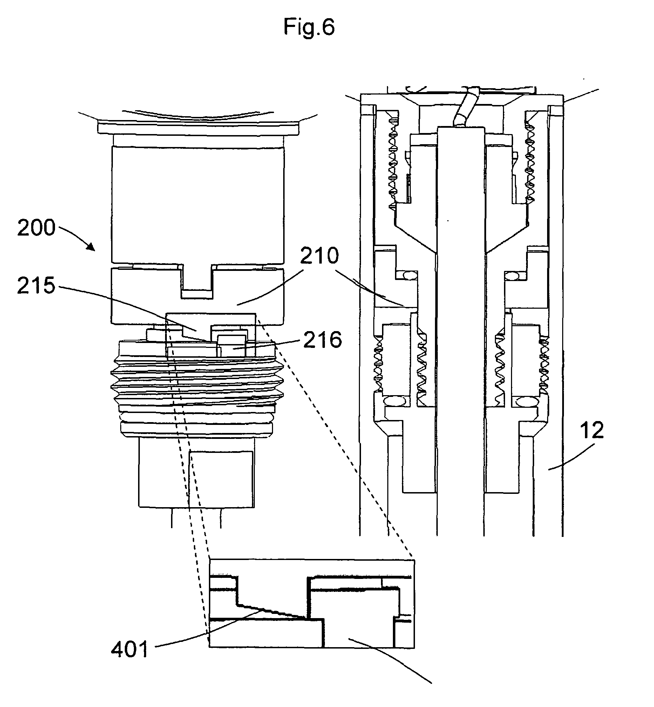

Hat die Gewindehülse 207 die Entkoppelstellung gemäß Figur 6 erreicht, so kann der Zapfen 215 des Mitnehmers 210 aufgrund der im Wesentlichen schrägen, rampenförmigen Gleitfläche 401 aus dem Eingriff mit der Nut 216 gelöst werden, so dass eine Drehmomentenübertragung zwischen der Gewindehülse 207 und dem Mitnehmer 210 unterbrochen ist. Die Einschraubanordnung 200 kann nun gegenüber dem Halter 12 frei in Einschraubrichtung gedreht werden. Hierbei müssen lediglich Reibkräfte der Flachdichtung 302 und Reibkräfte im Bereich der zweiten Vorspannmittel 208 überwunden werden. Aufgrund der schrägen Gleitfläche 401 des Zapfens 215 kann der Mitnehmer 210 leicht über eine Kante der in der Gewindehülse 207 ausgebildeten Nut 216 gleiten. Hierbei erfährt der Mitnehmer 210 aufgrund der schrägen Gleitfläche 401 eine Kraft in axialer Richtung, die den Mitnehmer 210 in die bereits erwähnte Ausweichstellung B gegenüber der Gewindehülse 207 anhebt, so dass der Mitnehmer 210 und damit auch die Einschraubanordnung 200 relativ zu dem Halter 12 sowie relativ zu der Gewindehülse 207 drehbar ist.

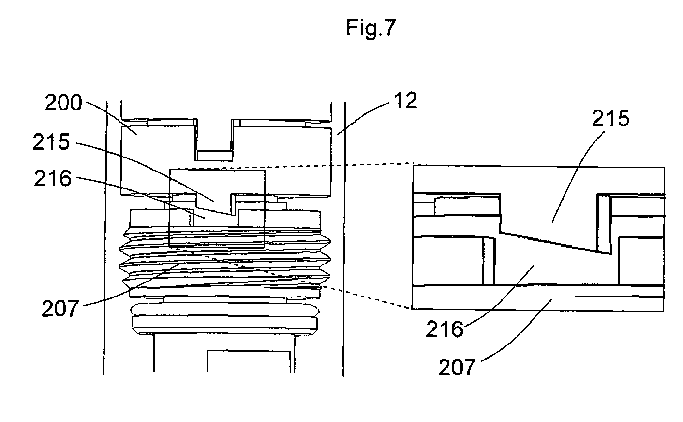

Figur 7 zeigt die Eingriffssituation des Zapfens 215 in die Nut 216 zum Herausschrauben der Einschraubanordnung 200 aus dem Halter 12.

Die Vorspannung des Mitnehmers 210 mittels der ersten Vorspannmittel 211 (nicht dargestellt) bewirkt, dass der an dem Mitnehmer 210 angeordnete Zapfen 215 wieder zurück in die Nut 216 der Gewindehülse 207 gedrückt wird, sobald sich der Zapfen 215 in axialer Richtung über der Nut 216 befindet so dass der gegenseitige Eingriff wieder hergestellt ist. Wird nun die Einschraubanordnung 200 bzw. der Grundkörper 201 entgegen der Einschraubrichtung gedreht, so kann der Zapfen 215 aufgrund der schrägen Oberfläche nicht mehr über eine Kante der Nut 216 gleiten, so dass der Eingriff des Zapfens 215 in der Nut 216 erhalten bleibt und ein Drehmoment von dem Grundkörper 201 mittels des Mitnehmers 210 auf die Gewindehülse 207 übertragen wird, so dass diese aufgrund der drehmomentfesten Verbindung die Einschraubanordnung 200 aus dem Halter 12 herausschraubt.

### Bezugszeichenliste

| | |
|---|---|
| 11 | Sensor |
| 12 | Halter |
| 13 | Anlage |
| 14 | Sensorfläche |
| 15 | Vorderkante |
| 16 | Schweißnaht |
| | |
| 200 | Einschraubanordnung |
| 201 | Grundkörper |
| 202 | Druckhülse |
| 203 | Druckmutter |
| 204 | Adapterhülse |
| 205 | Sensorgehäuse |
| 206 | erster Flansch (Einschraubanschlag) |
| 207 | Gewindehülse |
| 208 | zweite Vorspannmittel |
| 209 | zweiter Flansch |
| 210 | Mitnehmer |
| 211 | erste Vorspannmittel |
| 212 | Absatz |
| 213 | Durchgangsbohrung |
| 214 | Kabelbaum |
| 215 | Zapfen |
| 216 | Nut |
| 217 | Zapfen |
| 218 | Nut |
| | |
| 301 | Innengewinde (Halter) |
| 302 | Flachdichtung (dritte Vorspannmittel) |
| 401 | Gleitfläche |
| | |
| A | Grundstellung |
| B | Ausweichstellung |
| C | Einschraubgrundstellung |
| D | Entkoppelstellung |

## Patentansprüche

1. Einschraubanordnung mit einer vordefinierten maximalen Drehmomentübertragung zum Einschrauben in ein Innengewinde (301) eines Halters (12), mit:
- einem in einer axialen Längsrichtung erstreckten Grundkörper (201),
- einem an dem Grundkörper (201) angeordneten Einschraubanschlag (206) zum Beaufschlagen des Halters (12) und zum Begrenzen einer Einschraubtiefe der Einschraubanordnung (200) in den Halter (12),
- einer Gewindehülse (207) mit einem Außengewinde zum Einschrauben in das Innengewinde (301) des Halters (12),
wobei die Gewindehülse (207) koaxial auf dem Grundkörper (201) angeordnet und in dessen axialer Längsrichtung zwischen einer Einschraubgrundstellung (C) und einer Entkoppelstellung (D) in Abhängigkeit von einer Flächenpressung zwischen dem Einschraubanschlag (206) und dem Halter (12) verschiebbar ist,
wobei die Gewindehülse (207) mittels Drehmomentübertragungmitteln in kraftschlüssigem Eingriff mit dem Grundkörper (201) zum Übertragen eines Drehmoments von dem Grundkörper (201) auf die Gewindehülse (207) steht, solange sich die Gewindehülse (207) in der Einschraubgrundstellung (C) befindet oder in eine zwischen der Einschraubgrundstellung (C) und der Entkoppelstellung (D) angeordneten Zwischenstellung axial verschoben ist, und der kraftschlüssige Eingriff gelöst ist, sobald die Gewindehülse (207) in die Entkoppelstellung (D) verschoben ist, so dass die Einschraubanordnung (200) relativ zu der Gewindehülse (207) ohne weitere Erhöhung der Flächenpressung in einer Einschraubrichtung frei drehbar ist.

2. Einschraubanordnung nach Anspruch 1, die außerdem einen koaxial auf dem Grundkörper (201) benachbart zu der Gewindehülse (207) angeordneten Mitnehmer (210) umfasst, der auf dem Grundkörper (201) axial verschiebbar zwischen einer Grundstellung (A) und einer Ausweichstellung (B) angeordnet ist, wobei die Drehmomentübertragungsmittel erste (215, 216) und zweite (217, 218) Drehmomentübertragungsmittel umfassen und der Mitnehmer (210) mittels der ersten Drehmomentübertragungsmittel (215, 216) in kraftschlüssigem Eingriff mit der Gewindehülse (207) zum Übertragen eines Drehmoments von dem Grundkörper (201) auf die Gewindehülse (207) steht, solange sich die Gewindehülse (207) in der Einschraubgrundstellung (C) befindet oder in die Zwischenstellung axial verschoben ist, und mittels der zweiten Drehmomentübertragungsmittel (217, 218) trotz axialer Verschiebbarkeit des Mitnehmers (210) in stetig drehmomentübertragendem Eingriff mit dem Grundkörper (201) steht.

3. Einschraubanordnung nach Anspruch 1 oder 2, bei dem die jeweiligen Drehmomentübertragungsmittel (215, 216, 217, 218) jeweils mindestens einen sich in axialer Richtung erstreckenden Fortsatz und mindestens eine sich in gleicher axialer Richtung hierzu erstreckende Ausnehmung zur kraftschlüssigen Aufnahme des Fortsatzes zum Übertragen eines Drehmoments umfassen.

4. Einschraubanordnung nach Anspruch 3, bei dem jeweils mindestens einer der Fortsätze der Gewindehülse (207) und mindestens eine der Ausnehmungen dem Grundkörper (201) und/oder dem Mitnehmer (210) zugeordnet sind oder mindestens einer der Fortsätze dem Grundkörper (201) und/oder dem Mitnehmer (210) und mindestens eine der Ausnehmungen der Gewindehülse (207) zugeordnet sind.

5. Einschraubanordnung nach Anspruch 3 oder 4, bei dem mindestens einer der Fortsätze dem Mitnehmer (210) und mindestens eine der Ausnehmungen dem Grundkörper (201) zugeordnet sind oder mindestens einer der Fortsätze dem Grundkörper (201) und mindestens eine der Ausnehmungen dem Mitnehmer (210) zugeordnet sind.

6. Einschraubanordnung nach einem der Ansprüche 3 bis 5, bei dem der mindestens eine Fortsatz als Zapfen (215, 217) und die mindestens eine Ausnehmung als Nut (216, 218) ausgebildet ist, wobei der Zapfen (215, 217) zum kraftschlüssigen Eingreifen in die Nut (216, 218) zum Übertragen eines Drehmoments ausgebildet ist.

7. Einschraubanordnung nach Anspruch 6, wobei der mindestens eine Zapfen (215, 217) der ersten Drehmomentübertragungsmittel (215, 216) an einem der mindestens einen Nut (216, 218) zugewandten Eingriffsende mindestens eine Gleitoberfläche umfasst, um mindestens in der Entkoppelstellung (D) der Gewindehülse (207) den Mitnehmer (210) beim Einschrauben der Einschraubanordnung (200) in die Ausweichstellung (B) zu verschieben, so dass ein Lösen des kraftschlüssigen Eingriffs des Mitnehmers (210) mit der Gewindehülse (207) erfolgt.

8. Einschraubanordnung nach Anspruch 7, wobei die mindestens eine Gleitoberfläche als im Wesentlichen schräge, rampenförmige Gleitfläche (401) ausgebildet ist, welche.in Einschraubrichtung derart gekippt ist, dass der Zapfen (215) bei einem Drehen des Mitnehmers (210) in Einschraubrichtung durch Anheben des Zapfens (215) aus der Nut (216) aus dem Eingriff mit der Nut (216) gelöst wird und bei einem Drehen des Mitnehmers (210) entgegen der Einschraubrichtung in dem Eingriff mit der Nut (216) verbleibt.

9. Einschraubanordnung nach einem der Ansprüche 2 bis 8, bei dem der Mitnehmer (210) mittels erster Vorspannmittel (211) relativ zu dem Grundkörper (201) mindestens in der axialen Richtung in Richtung seiner Grundstellung (A) vorgespannt ist.

10. Einschraubanordnung nach einem der Ansprüche 1 bis 9, bei dem die Gewindehülse (207) mittels zweiter Vorspannmittel (208) relativ zu dem Grundkörper (201) mindestens in der axialen Richtung in Richtung der Einschraubgrundstellung (C) vorgespannt ist.

11. Einschraubanordnung nach einem der Ansprüche 1 bis 10, wobei die Einschraubanordnung (200) im Bereich des Einschraubanschlags (206) dritte Vorspannmittel (302) für ein vorgespanntes Beaufschlagen des Halters (12) umfasst.

12. Einschraubanordnung nach Anspruch 9 bis 11, wobei die ersten (211), zweiten (208) und/oder dritten Vorspannmittel (302) aus einer Gruppe bestehend aus elastischen Gummiringen, Spiralfedern oder Tellerfedern ausgewählt sind.

13. Einschraubanordnung nach einem der Ansprüche 1 bis 12, wobei die Einschraubanordnung (200) einen Sensor (11) umfasst, der drehfest an einem der Gewindehülse (207) abgewandten Ende des Grundkörpers (201) angeordnet ist.

14. Einschraubanordnung nach einem der Ansprüche 1 bis 13, wobei der Grundkörper (201) mehrere drehfest miteinander verbundene Einzelabschnitte (202, 203, 204) umfasst und/oder mindestens der Grundkörper (201) in dessen axialer Längsrichtung eine durchgängige Bohrung (213) umfasst.

15. Sensoranordnung zum Befestigen an einem Halter (12), mit mindestens einem optoelektrischen Sensor und einer Einschraubanordnung (200) zum Einschrauben in ein Innengewinde (301) eines Halters (12), wobei die Einschraubanordnung nach einem der Ansprüche 1 bis 14 ausgebildet ist.

## Claims

1. A screw-in device with a pre-defined maximum torque transmission for screwing into an internal thread (301) of a holding means (12), with
- a main body (201) extended in an axial longitudinal direction,
- a screw-in stop (206) arranged on the main body (201) for acting upon the holding means (12) and for limiting a screw-in depth of the screw-in device (200) in the holding means (12),
- a threaded sleeve (207) with an external thread for screwing into the internal thread (301) of the holding means (12),
wherein the threaded sleeve (207) is arranged coaxially on the main body (201) and is displaceable in the axial longitudinal direction thereof between a screw-in basic position (C) and an uncoupling position (D) in a manner dependent upon a surface pressure between the screw-in stop (206) and the holding means (12),
wherein the threaded sleeve (207) engages in a non-positively locking manner with the main body (201) by means of torque transmission means in order to transmit a torque from the main body (201) to the threaded sleeve (207), provided that the threaded sleeve (207) is present in the screw-in basic position (C) or is displaced axially into an intermediate position situated between the screw-in basic position (C) and the uncoupling position (D), and the non-positively locking engagement is released as soon as the threaded sleeve (207) is displaced into the uncoupling position (D), so that the screw-in device (200) is freely rotatable relative to the threaded sleeve (207) without a further increase in the surface pressure in a screw-in direction.

2. A screw-in device according to claim 1, which additionally comprises an entrainment means (210) which is arranged coaxially on the main body (201) adjacent to the threaded sleeve (207) and which is arranged on the main body (201) in an axially displaceable manner between a basic position (A) and a yielding position (B), wherein the torque transmission means comprise first (215, 216) and second (217, 218) torque transmission means and the entrainment means (210) engages in a non-positively locking manner with the threaded sleeve (207) by means of the first torque transmission means (215, 216) in order to transmit a torque from the main body (201) to the threaded sleeve (207), provided that the threaded sleeve (207) is in the screw-in basic position (C) or has been displaced axially into the intermediate position, and continuously engages with the main body (201) in a manner transmitting torque by means of the second torque transmission means (217, 218) despite the axial displaceability of the entrainment means (210).

3. A screw-in device according to claim 1 or 2, in which the respective torque transmission means (215, 216, 217, 218) comprise in each case at least one extension extending in the axial direction and at least one recess extending in the same axial direction thereto in order to receive the extension in a non-positively locking manner to transmit a torque.

4. A screw-in device according to claim 3, in which at least one of the extensions is associated with the threaded sleeve (207) and at least one of the recesses is associated with the main body (201) and/or with the entrainment means (210) or at least one of the extensions is associated with the main body (201) and/or with the entrainment means (210) and at least one of the recesses is associated with the threaded sleeve (207) in each case.

5. A screw-in device according to claim 3 or 4, in which at least one of the extensions is associated with the entrainment means (210) and at least one of the recesses is associated with the main body (201) or at least one of the extensions is associated with the main body (201) and at least one of the recesses is associated with the entrainment means (210).

6. A screw-in device according to any one of claims 3 to 5, in which the at least one extension is designed in the form of a pin (215, 217) and the at least one recess is designed in the form of a groove (216, 218), wherein the pin (215, 217) is designed for engaging in the groove (216, 218) in a non-positively locking manner in order to transmit a torque.

7. A screw-in device according to claim 6, wherein the at least one pin (215, 217) of the first torque transmission means (215, 216) on an engagement end facing the at least one groove (216, 218) comprises at least one sliding surface in order to displace the entrainment means (210) - at least in the uncoupling position (D) of the threaded sleeve (207) - during the screwing-in of the screw-in device (200) into the yielding position (B), so that a release of the non-positively locking engagement of the entrainment means (210) with the threaded sleeve (207) takes place.

8. A screw-in device according to claim 7, wherein the at least one sliding surface is designed in the form of a substantially oblique ramp-shaped sliding face (401) which is tilted in the screw-in direction in such a way that the pin (215) is released from engagement with the groove (216) with a rotation of the entrainment means (210) in the screw-in direction as a result of lifting the pin (215) out of the groove (216) and it remains in engagement with the groove (216) with a rotation of the entrainment means (210) in a direction contrary to the screw-in direction.

9. A screw-in device according to any one of claims 2 to 8, in which the entrainment means (210) is pre-stressed in the direction of its basic position (A) by means of first pre-stressing means (211) relative to the main body (201) at least in the axial direction.

10. A screw-in device according to any one of claims 1 to 9, in which the threaded sleeve (207) is pre-stressed in the direction of the screw-in basic position (C) by means of second pre-stressing means (208) relative to the main body (201) at least in the axial direction.

11. A screw-in device according to any one of claims 1 to 10, wherein the screw-in device (200) comprises third pre-stressing means (302) in the region of the screw-in stop (206) in order to act upon the holding means (12) in a pre-stressed manner.

12. A screw-in device according to claim[s] 9 to 11, wherein the first (211), second (208) and/or third pre-stressing means (302) are selected from a group comprising elastic rubber rings, spiral springs or cup springs.

13. A screw-in device according to any one of claims 1 to 12, wherein the screw-in device (200) comprises a sensor (11) which is arranged in a rotationally fixed manner on an end of the main body (201) facing away from the threaded sleeve (207).

14. A screw-in device according to any one of claims 1 to 13, wherein the main body (201) comprises a plurality of individual portions (202, 203, 204) connected to one another in a rotationally fixed manner and/or at least the main body (201) comprises a continuous bore (213) in the axial longitudinal direction thereof.

15. A sensor device for fastening to a holding means (12), with at least one opto-electrical sensor and a screw-in device (200) for screwing into an internal thread (301) of a holding means (12), wherein the screw-in device is designed according to any one of claims 1 to 14.

## Revendications

1. Dispositif de vissage ayant une transmission de couple de rotation maximum prédéfinie pour permettre d'effectuer un vissage dans un alésage interne (301) d'un support (12) comportant :
- un corps de base (201) s'étendant dans une direction longitudinale axiale,
- une butée de vissage (206) montée sur le corps de base (201) pour solliciter le support (12) et pour limiter la profondeur de vissage du dispositif de vissage (200) dans le support (12),
- un manchon fileté (207) comportant un filetage externe pour permettre le vissage dans l'alésage interne (301) du support (12),
- le manchon fileté (207) étant monté coaxialement sur le corps de base (201) et pouvant être déplacé dans sa direction longitudinale axiale entre une position de vissage de base (C) et une position de découplage (D) en fonction de la pression surfacique entre la butée de vissage (206) et le support (12),
- le manchon fileté (207) étant en prise par une liaison par la force sous l'action de moyens de transmission du couple, avec le corps de base (201) pour transmettre un couple de rotation du corps de base (201) sur le manchon fileté (207), tant que ce manchon fileté (207) est situé dans la position de vissage de base, ou est déplacé axialement dans une position intermédiaire située entre la position de vissage de base (C) et la position de découplage (D), et la mise en prise par une liaison par la force étant libérée dès que le manchon fileté (207) est déplacé dans la position de découplage (D) de sorte que le dispositif de vissage (200) soit librement mobile en rotation dans le sens de vissage par rapport au manchon fileté (207) sans autre augmentation de la pression surfacique.

2. Dispositif de vissage conforme à la revendication 1, qui comporte en outre un élément d'entrainement (210) monté coaxialement sur le corps de base (201) au voisinage du manchon fileté (207), et pouvant être déplacé axialement sur le corps de base (201) entre une position de base (A) et une position de dégagement (B), les moyens de transmission du couple comportant des premiers (215, 216) et des seconds (217, 218) moyens de transmission du couple, et l'élément d'entrainement (210) venant en prise par une liaison par la force avec le manchon fileté (207) sous l'action des premiers moyens de transmission du couple (215, 216) pour transmettre un couple de rotation du corps de base (201) au manchon fileté (207) tant que le manchon fileté (207) se trouve dans la position de vissage de base (C) ou est déplacé axialement dans la position intermédiaire, et est, sous l'action des seconds moyens de transmission du couple (217, 218) et malgré la faculté de déplacement axial de l'élément d'entrainement (210) constamment en prise avec le corps de base (201) pour permettre la transmission du couple.

3. Dispositif de vissage conforme à la revendication 1 ou 2, dans lequel chacun des moyens de transmission du couple (215, 216, 217, 218) comporte respectivement au moins un prolongement s'étendant en direction axiale et au moins un évidement s'étendant dans la même direction axiale pour permettre la réception par une liaison par la force du prolongement de façon à permettre la transmission d'un couple.

4. Dispositif de vissage conforme à la revendication 3, dans lequel au moins l'un des prolongements est associé au manchon fileté (207) et au moins l'un des évidements est associé au corps de base (201) et/ou à l'élément d'entrainement (210), ou au moins l'un des prolongements est associés au corps de base (201) et/ou à l'élément d'entrainement (210) et au moins l'un des évidements est associé au manchon fileté (207).

5. Dispositif de vissage conforme à la revendication 3 ou 4, dans lequel au moins l'un des prolongements est associé à l'élément d'entrainement (210) et au moins l'un des évidements est associé au corps de base (201) ou au moins l'un des prolongements est associé au corps de base (201) et au moins l'un des évidements est associé à l'élément d'entrainement (210).

6. Dispositif de vissage conforme à l'une des revendications 3 à 5, dans lequel
le ou les prolongement(s) est/ sont réalisé(s) sous la forme de tourillons (215, 217) et le ou les évidement(s) est/ sont réalisé(s) sous la forme de rainures (216, 218), le ou les tourillon(s) (215, 217) étant réalisé(s) pour venir en prise par une liaison par la force dans la ou les nervure(s) (216, 218) de façon à permettre la transmission d'un couple.

7. Dispositif de vissage conforme à la revendication 6, dans lequel le ou les tourillon(s) (215, 217) des premiers moyens de transmission de couple (215, 216) comporte(nt) au niveau d'une extrémité de mise en prise tournée vers la ou les rainure(s) (216, 218), au moins une surface de glissement pour permettre, au moins dans la position de découplage (D) du manchon fileté (207), de déplacer l'élément d'entrainement (210) dans la position de dégagement (B) lors du vissage du dispositif de vissage (200), de façon à obtenir une libération de la mise en prise par une liaison par la force de l'élément d'entrainement (210) avec le manchon fileté (207).

8. Dispositif de vissage conforme à la revendication 7, dans lequel la ou les surface(s) de glissement est/sont réalisée(s) sous la forme d'une surface de glissement en forme de rampe (401) essentiellement inclinée, basculée dans la direction de vissage de sorte que lors d'une rotation de l'élément d'entrainement (210) dans la direction de vissage, le tourillon (215) soit libéré de sa mise en prise avec la rainure (216) en étant soulevé de cette rainure (216), et que lors d'une rotation de l'élément d'entrainement (210) en direction contraire à la direction de vissage, celui-ci reste en prise avec la rainure (216).

9. Dispositif de vissage conforme à l'une des revendications 2 à 8, dans lequel l'élément d'entrainement (210) est précontraint par des premiers moyens de précontrainte (211) par rapport au corps de base (201) au moins en direction axiale, en direction de sa position de base (A).

10. Dispositif de vissage conforme à l'une des revendications 1 à 9, dans lequel le manchon fileté (207) est précontraint par des seconds moyens de précontrainte (208) par rapport au corps de base (201) au moins en direction axiale, en direction de sa position de vissage de base (C).

11. Dispositif de vissage conforme à l'une des revendications 1 à 10, dans lequel le dispositif de vissage (200) comporte, dans la zone de la butée de vissage (206) des troisièmes moyens de précontrainte (302) pour permettre une sollicitation en précontrainte du support (12).

12. Dispositif de vissage conforme à l'une des revendications 9 à 11, dans lequel les premiers (211), les seconds (208) et/ou troisièmes moyens de précontrainte (302) sont choisis dans le groupe formé par les bagues en caoutchouc élastiques, les ressorts spirales et les ressorts à vis.

13. Dispositif de vissage conforme à l'une des revendications 1 à 12, dans lequel le dispositif de vissage (200) comporte un détecteur (11) qui est monté solidairement en rotation à une extrémité du corps de base (201) située à l'opposé du manchon fileté (207).

14. Dispositif de vissage conforme à l'une des revendications 1 à 13, dans lequel le corps de base (201) comporte plusieurs tronçons individuels (202, 203, 204) reliés les uns aux autres solidairement en rotation et/ou au moins le corps de base (201) comporte dans sa direction longitudinale axiale un perçage traversant (213).

15. Dispositif de détection destiné à être fixé sur un support (12) comportant au moins un détecteur opto-électrique et un dispositif de vissage (200) pour permettre le vissage dans un alésage interne (301) d'un support (12), le dispositif de vissage étant réalisé conformément à l'une des revendications 1 à 14.
